# EUROPEAN PATENT SPECIFICATION

(11) **EP 1 435 372 B1**
(45) Date of publication and mention of the grant of the patent: **14.06.2006**
(21) Application number: 03104962.0
(22) Date of filing: 23.12.2003
(51) Int. Cl.: C08J 11/16, C08J 11/24, C08L 21/00

(54) **Devulcanization of cured rubber**
Devulkanisierung von vernetztem Gummi
Dévulcanisation de caoutchouc réticulé

(30) Priority: 03.01.2003 US 437790 P; 20.02.2003 US 370993
(43) Date of publication of application: 07.07.2004
(73) Proprietor: THE GOODYEAR TIRE & RUBBER COMPANY, Akron, Ohio 44316-0001 (US)
(72) Inventor: Benko, David Andrew, Munroe Falls, OH 44262 (US); Beers, Roger Neil, Uniontown / Ohio, OH 44685 (US); Lee, Sunggyu, Columbia / Missouri, MO 65203 (US); Clark, Kelly Lee, Columbia / Missouri, MO 65201 (US)
(74) Representative: Kutsch, Bernd

(56) References cited:
- EP-A- 1 142 944
- US-A- 5 891 926
- PATENT ABSTRACTS OF JAPAN vol. 1996, no. 11, 29 November 1996 (1996-11-29) & JP 08 169979 A (NOK CORP), 2 July 1996 (1996-07-02)
- PATENT ABSTRACTS OF JAPAN vol. 2000, no. 07, 29 September 2000 (2000-09-29) & JP 2000 095895 A (TOYO TIRE &RUBBER CO LTD), 4 April 2000 (2000-04-04)

## Description

After they have been worn-out during their limited service life, millions of used tires, hoses, belts and other rubber products are discarded annually. These used rubber products are typically discarded and hauled to a dump because there is very little use for them after they have served their original intended purpose.

The recycling of cured rubber products has proven to be an extremely challenging problem. This problem associated with recycling cured rubber products arises because, in the vulcanization process, the rubber becomes crosslinked with sulfur. After vulcanization, the crosslinked rubber becomes thermoset and cannot be reformed into other products

Various techniques for devulcanizing cured rubber have been developed. Devulcanization offers the advantage of rendering the rubber suitable for being reformulated and recured into new rubber articles if it can be carried out without degradation of the rubber. The recycled rubber could again be used for its original intended purpose rather than simply as a filler. In other words, the devulcanized reclaimed rubber could again be used at higher levels in applications where there are high performance requirements; such as, in manufacturing tires, hoses and belts.

US-A- 4,104,205 discloses a technique for devulcanizing sulfur-vulcanized elastomer containing polar groups which comprises applying a controlled dose of microwave energy.

US-A- 5,284,625 discloses a continuous ultrasonic method for breaking the carbon-sulfur, sulfur-sulfur and, if desired, the carbon-carbon bonds in a vulcanized elastomer.

US-A- 5,891,926 discloses a process for devulcanizing cured rubber into devulcanized rubber process comprising (1) heating the cured rubber to a temperature which is within the range of 150°C to 300°C under a pressure of at least 3.4 x 10⁶ Pascals in 2-butanol to devulcanize the cured rubber into the devulcanized rubber thereby producing a mixture of solid cured rubber, solid devulcanized rubber and a solution of the devulcanized rubber in the 2-butanol, (2) removing the solution of the devulcanized rubber from the solid cured rubber and the solid devulcanized rubber, (3) cooling the solution of the devulcanized rubber in the 2-butanol to a temperature of less than 100°C and (4) separating the devulcanized rubber from the 2-butanol.

US-A- 6,380,269 discloses a similar process for devulcanizing the surface of reclaimed rubber crumb into surface devulcanized reclaimed rubber crumb. The reclaimed rubber crumb has a particle size which is within the range of 325 mesh to 20 mesh.

### Summary of the Invention

The most effective agent for devulcanizing cured rubbers is 2-butanol. However, large quantities of 2-butanol are required to devulcanize cured rubber on the large-scale basis that is required for commercialization. This invention relates to a technique for reducing the quantity of 2-butanol that is needed in the devulcanization of cured rubber.

The present invention is based upon the unexpected finding that the amount of 2-butanol needed to devulcanize cured rubber can be reduced by conducting the devulcanization in the presence of carbon dioxide. In fact, the amount of 2-butanol required can be reduced by at least 50 percent in cases where the devulcanization is carried out in the presence of carbon dioxide. Since carbon dioxide is an environmentally friendly agent it does not necessarily need to be recycled for subsequent use. In any case, the utilization of carbon dioxide to reduce the quantity of 2-butanol needed leads to significant process and economic advantages. The present invention is accordingly directed to a commercially viable technique for recycling large quantities of cured rubber from reclaimed rubber articles.

By utilizing the process of this invention, cured rubber can be devulcanized using a simple technique without the need for microwaves, ultrasonic waves or an alkali metal. In other words, the cured rubber crumb can be devulcanized in the absence of microwaves, ultrasonic waves or an alkali metal. The employment of the process of this invention also preserves the original microstructure of the rubber and allows for it to maintain a relatively high molecular weight. Thus, the process of this invention primarily breaks sulfur-sulfur bonds and/or carbon-sulfur bonds rather than carbon-carbon bonds. The devulcanized, reclaimed rubber can accordingly be used in the same types of applications as was the original rubber.

The subject invention more specifically discloses a process for devulcanizing cured rubber into devulcanized rubber that is capable of being recompounded and recured into useful rubber products according to claim 1.

This invention further discloses a process for devulcanizing the surface of reclaimed rubber crumb into surface devulcanized reclaimed rubber crumb that is suitable for being recompounded and recured into high performance rubber products, according to claim 2.

### Detailed Description of the Invention

Virtually any type of sulfur-cured rubber can be devulcanized by utilizing the process of this invention. For instance, it can be used to devulcanize natural rubber, synthetic polyisoprene rubber, polybutadiene rubber, styrene-butadiene rubber, isoprene-butadiene rubber, styrene-isoprene rubber, styrene-isoprene-butadiene rubber, nitrile rubber, carboxylated nitrile rubber, bromobutyl rubber, chlorobutyl rubber and the like. The technique of this invention can also be used to devulcanize blends of various types of rubbers. This is important because tires and most other rubber articles are typically made using blends of various elastomers. In actual practice the reclaimed rubber devulcanized by the process of this invention will usually be a blend of various rubbers. It will in effect be a blend having the composition of the tires, hoses, belts and other rubber articles used as the source of the reclaimed rubber.

In one preferred embodiment of this invention only the surface of rubber crumb particles made from the cured rubber is devulcanized. This technique is described in US-A- 6,380,269. This typically involves grinding the reclaimed rubber to a particle size which is within the range of 325 mesh to 20 mesh and then devulcanizing the surface of reclaimed rubber crumb. It has been found that by doing so the surface devulcanized reclaimed rubber can be blended into and cocured with virgin rubber. This offers a tremendous commercial advantage in that it is only necessary to devulcanize the rubber on the surface of the reclaimed rubber crumb. Thus, the cost of the devulcanization procedure is only a fraction of the cost associated with devulcanizing the total quantity of reclaimed rubber being recycled.

The surface devulcanized reclaimed rubber can be used in manufacturing rubber articles that demand high performance characteristics (such as, tires, hoses and belts) when blended with virgin rubbers in quantities of up to 40 phr. In fact, such blends of the surface devulcanized reclaimed rubber with virgin elastomers have cure properties and tensile properties that are comparable to blends made with totally virgin materials.

In devulcanizing only the surface of the rubber crumb is important for the rubber crumb treated by the process of this invention to first be reduced to a particle size which is within the range of 325 mesh (44 microns) to 20 mesh (840 microns). This can be accomplished by any mechanical means that will result in the particle size of the crumb rubber being reduced to be within the desired size range. For instance, the reclaimed rubber can be ground, cut or chopped to the desired particle size. It is normally preferred for the reclaimed rubber crumb to have a particle size which is within the range of 100 mesh (149 microns) to 40 mesh (420 microns). It is typically most preferred for the reclaimed rubber crumb particles to have a particle size of 60 mesh (250 microns) to 40 mesh (about 420 microns).

If the particle size of the surface devulcanized reclaimed rubber crumb made by the technique of this invention is larger than 20 mesh (840 microns), it will compromise the physical properties of products manufactured therewith. Thus, it would not be suitable for use in manufacturing high performance rubber products; such as, tires, hoses or power transmission belts. On the other hand, the large scale commercial benefit of the present invention is reduced as the particle size of the reclaimed rubber crumb is reduced. This is because the benefit of devulcanizing only the surface of the reclaimed rubber crumb is lost as particle size is reduced. This is, of course, because the ratio of the volume of the core of the crumb rubber particles (which are not devulcanized) to the volume of the shell of the crumb rubber particles (which are devulcanized) is reduced. Thus, a higher percentage of the reclaimed rubber is devulcanized at smaller particle sizes which is detrimental from an economic standpoint. At particle sizes of less than 325 mesh (44 microns), the economic benefits of devulcanizing only the surface of the rubber particles is believed to be lost because virtually the total quantity of the crumb rubber is devulcanized rather than just its surface. However, in some applications it may be desirable to fully devulcanize the entire quantity of the rubber being recycled. In such cases the use of carbon dioxide in accordance with this invention to reduce the quantity of 2-butanol required is of even greater significance.

The devulcanization process of this invention can be carried out by simply heating the cured reclaimed rubber crumb in the presence of a mixture of 2-butanol and carbon dioxide to a temperature of at least 150°C under a pressure of at least 3.4 x 10⁶ Pascals (Pa). It is normally preferred for the temperature to be no more than 300°C to minimize the level of polymer degradation. In other words, if the devulcanization process is conducted at a temperature of no more than 300°C, the sulfur-sulfur and/or carbon-sulfur bonds in the cured rubber can be broken preferentially to the carbon-carbon bonds in the rubber. Thus, by carrying out the devulcanization process at a temperature of 300°C or less, the molecular weight of the rubber can be maintained at a high level. For this reason, the devulcanization process will typically be conducted at a temperature which is within the range of 150°C to 300°C.

It is normally preferred for the devulcanization process to be carried out at a temperature that is within the range of 200°C to 280°C. The most preferred devulcanization temperatures are within the range of 240°C to 270°C. The pressure employed will typically be within the range of 3.4 x 10⁶ Pascals (500 Ibs/in²) to 3.4 x 10⁷ Pascals (5000 Ibs/in²). It is normally preferred to utilize a pressure which is within the range of 6.9 x 10⁶ Pascals (1000 Ibs/in²) to 2.8 x 10⁷ Pascals (4000 Ibs/in²). It is generally most preferred to utilize a pressure which is within the range of 1.7 x 10⁷ Pascals (2500 Ibs/in²) to 2.4 x 10⁷ Pascals (3500 Ibs/in²). It is normally preferred for the cured rubber being devulcanized to be emersed in a bath that is comprised of a mixture of 2-butanol and carbon dioxide. In any case, it is important to protect the devulcanized rubber from oxygen during the time that it is at an elevated temperature.

The weight ratio of carbon dioxide to 2-butanol will typically be within the range of 5:95 to 70:30. The weight ratio of carbon dioxide to 2-butanol will preferably be within the range of 20:80 to 60:40, and will more preferable be within the range of 30:70 to 55:45.

The rubber crumb will be subjected to the devulcanization for a period of time that is sufficient to substantially devulcanize at least the shell of the crumb particles. As has been explained in some cases it is not necessary to devulcanize the rubber in the core of the crumb particles. The optimal amount of time required to devulcanize the rubber crumb particles is dependent upon the temperature, the pressure and the particle size of the rubber crumb. However, the devulcanization time will typically be within the range of 1 minute to 60 minutes. The devulcanization will typically be carried out over a period of 5 minutes to 40 minutes. The devulcanization will more commonly be carried out over a period of 10 minutes to 30 minutes.

After the devulcanization has been completed, the devulcanized reclaimed rubber crumb is separated from the mixture of 2-butanol and carbon dioxide. Since the devulcanized rubber is somewhat soluble in the mixture of 2-butanol and carbon dioxide at elevated temperatures, the separation will typically be carried out at a temperature of less than 100°C. The devulcanized reclaimed rubber crumb can be recovered from the mixture of 2-butanol and carbon dioxide utilizing conventional techniques for separating solids from liquids and gases. For instance, decantation, filtration, centrification or a similar technique can be used to recover the devulcanized reclaimed rubber crumb and other solid residue (such as, carbon black, silica, clay and metals) from the mixture of 2-butanol and carbon dioxide.

The devulcanized reclaimed rubber made by the process of this invention can then be recompounded and recured into high performance rubber products; such as, tires, hoses and belts. The weight average molecular weight of the rubber can be maintained at a high level of over 100,000 and typically over 150,000. In some cases, a weight average molecular weight of over 200,000 can be maintained. The devulcanization technique of this invention does not significantly change the microstructure of the rubber and it can accordingly be used in the same types of applications as was the original rubber. In other words, the devulcanized rubber can be recompounded and recured into the same types of rubber articles as was the original rubber.

In cases where only the surface of the rubber crumb particles are devulcanized the reclaimed rubber crumb is comprised of a core and an outer shell. The rubber in the outer shell of the crumb rubber particles is devulcanized to a high degree. Thus, the rubber in the shell of the surface devulcanized rubber crumb will again be capable of being cured with sulfur. The surface devulcanized reclaimed rubber crumb is accordingly capable of being cocured with virgin elastomers. However, the rubber in the core of the surface devulcanized reclaimed rubber crumb is a cured rubber. The surface devulcanized reclaimed rubber crumb is useful in blends with other elastomers at any ratio of volume of the devulcanized shell to volume of the cured core. However, for economic reasons, it is desirable to minimize the volume of the devulcanized outer shell and maximize the volume of the cured core.

Rubber compounds that contain up to 40 phr (parts per hundred parts by weight of rubber) of the surface devulcanized reclaimed rubber crumb can be made and utilized in manufacturing high performance rubber products. In most cases, 10 phr to 40 phr of the surface devulcanized reclaimed rubber will be blended with 60 phr to 90 phr of one or more virgin elastomers. The virgin elastomer can be virtually any type of rubbery polymer other than reclaimed rubber. For instance, the virgin rubber can be natural rubber, synthetic polyisoprene rubber, polybutadiene rubber, styrene-butadiene rubber, isoprene-butadiene rubber, styrene-isoprene rubber, styrene-isoprene-butadiene rubber, nitrile rubber, carboxylated nitrile rubber, bromobutyl rubber or chlorobutyl rubber.

The surface devulcanized reclaimed rubber will typically be employed in such blends at a level of 15 phr to 35 phr. It is normally preferred for the surface devulcanized reclaimed rubber to be present in such blends at a level of 20 phr to 30 phr. It is generally more preferred for the surface devulcanized reclaimed rubber to be present in such blends at a level of 25 phr to 30 phr.

A preferred use for surface devulcanized reclaimed rubber is in making tire tread rubber compounds. Such tire tread compounds will typically be comprised of (a) 10 phr to 30 phr of a surface devulcanized reclaimed rubber crumb, wherein said surface devulcanized reclaimed rubber crumb is comprised of a core and an outer shell, wherein the core is comprised of a cured rubber and wherein the outer shell is comprised of a devulcanized rubber, and (b) 70 phr to 90 phr of a sulfur-curable virgin rubber. The sulfur-curable virgin rubber will typically be natural rubber, synthetic polyisoprene rubber, polybutadiene rubber, styrene-butadiene rubber, isoprene-butadiene rubber, styrene-isoprene rubber, styrene-isoprene-butadiene rubber or a blend thereof. It is normally preferred for the surface devulcanized reclaimed rubber to be present at a level of 10 phr to 40 phr and it is most preferred for the surface devulcanized reclaimed rubber to be present at a level of 25 phr to about 30 phr.

The invention is illustrated by the following examples. Unless specifically indicated otherwise, parts and percentages are given by weight.

### Comparative Examples 1-10

US-A- 5,891,926 shows a series of experiments wherein cured styrene-butadiene rubber (SBR) containing 23.5 percent bound styrene was devulcanized in various alcohols, including methanol, ethanol, 1-butanol, 1-propanol, 2-propanol, 2-butanol, isobutyl alcohol, 4-methyl-2-pentanol and 1-pentanol. The alcohol was injected into a Hewlett-Packard 5890A gas chromatograph at a pressure of 2.1 x 10⁷ Pascals (3000 Ibs/in²) with an ISCO LC-5000 syringe pump. The Hewlett-Packard 5890A gas chromatograph was not used in the capacity of a chromatographic instrument. The chromatograph was used solely to provide a temperature controllable environment. In other words, the chromatograph was used in the capacity of a heating oven. The sample vessel in the gas chromatograph contained about 0.55 grams of cured SBR samples which were devulcanized and extracted by the alcohol that passed through the sample vessel which was inline with an all-metal flow path.

In the procedure used, the SBR samples were initially heated to a temperature of 150°C and maintained at that temperature under static conditions for 10 minutes in the alcohol which was, of course, under the pressure of 2.1 x 10⁷ Pascals (3000 Ibs/in²). Then, the alcohol was allowed to flow through the system at a flow rate of 1-2 ml per minute at a temperature of 150°C for 20 minutes with the alcohol exiting the chromatograph being collected and the amount of devulcanized SBR that was extracted being measured.

Then, the temperature of the sample chamber was increased to 200°C and was maintained at that temperature under static conditions for 10 additional minutes with the alcohol still being maintained at a pressure of 2.1 x 10⁷ Pascals (3000 Ibs/in²). Then, the alcohol was again allowed to flow through the system at a flow rate of 1-2 ml per minute at a temperature of 200°C for 20 minutes with the alcohol exiting the chromatograph being collected and with the amount of devulcanized SBR that was extracted being measured.

Then, the temperature of the sample chamber was increased to 250°C and was maintained at that temperature under static conditions for 10 additional minutes with the alcohol being maintained at a pressure of 2.1 x 10⁷ Pascals (3000 Ibs/in²). Then, the alcohol was again allowed to flow through the system at a flow rate of 1-2 ml per minute at a temperature of 250°C for 20 minutes with the alcohol exiting the chromatograph being collected and with the amount of devulcanized SBR extracted by the alcohol being measured.

Finally, the temperature of the sample chamber was increased to 300°C and was maintained at that temperature under static conditions for 10 additional minutes with the alcohol being maintained at a pressure of 2.1 x 10⁷ Pascals (3000 Ibs/in²). Then, the alcohol was again allowed to flow through the system at a flow rate of 1-2 ml per minute at a temperature of 300°C for 20 minutes with the alcohol exiting the chromatograph being collected and with the amount of devulcanized SBR extracted by the alcohol being measured.

The cumulative percentage of devulcanized SBR that was extracted from the cured SBR sample with each of the alcohols evaluated at 150°C, 200°C, 250°C and 300°C is reported in Table I. Example 2 is a repeat of Example 1. Examples 3-10 are examples where alcohols other than 2-butanol were used for the devulcanization.

**TABLE I**

| Ex. | Alcohol | 150°C | 200°C | 250°C | 300°C |
|---|---|---|---|---|---|
| 1 | 2-butanol | 38% | 82% | 90% | 93% |
| 2 | 2-butanol | 40% | 70% | 85% | 92% |
| 3 | methanol | 2% | 3% | 4% | 7% |
| 4 | ethanol | 2% | 4% | 9% | 20% |
| 5 | 1-propanol | 3% | 16% | 43% | 69% |
| 6 | 2-propanol | 2% | 7% | 13% | 25% |
| 7 | 1-butanol | 4% | 19% | 57% | 86% |
| 8 | isobutyl alcohol | 2% | 10% | 44% | 74% |
| 9 | 1-pentanol | 3% | 11% | 42% | 89% |
| 10 | 4-methyl-2-pentanol | 2% | 11% | 33% | 68% |

As can be seen from Table I, 2-butanol was far better than any of the other alcohols evaluated. It was particularly superior at lower temperatures. In fact, at 200°C, it extracted at least 85 percent of the SBR. The utilization of lower temperatures is, of course, desirable because less polymer degradation occurs at lower temperatures. The devulcanized SBR samples that were extracted were determined to have the same microstructure as the original SBR samples.

### Comparative Examples 11-18

In this series of experiments from US-A- 5,891,926, the general procedure utilized in Examples 1-10 was repeated except that temperature was held constant at 250°C and the alcohol was allowed to flow continuously at a rate of 1-2 ml per minute for 20 minutes at pressure. In this series of experiments, 2-butanol was used exclusively as the alcohol for the devulcanizations. Cured SBR samples that contained no filler, carbon black, silica or a combination of carbon black and silica were devulcanized and extracted with the 2-butanol. The SBR had an original weight average molecular weight of about 400,000. The weight average molecular weights of the devulcanized SBR samples recovered are reported in Table II.

**TABLE II**

| Example | Filler | Molecular Weight* |
|---|---|---|
| 11 | no filler | 181,000 |
| 12 | no filler | 186,000 |
| 13 | silica | 244,000 |
| 14 | silica | 293,000 |
| 15 | carbon black | 197,000 |
| 16 | carbon black | 216,000 |
| 17 | carbon black/silica | 177,000 |
| 18 | carbon black/silica | 177,000 |

| | | |
|---|---|---|
| *The molecular weights reported are weight average molecular weights. | | |

As can be seen from Table II, the devulcanization technique can be used for rubber samples that contained silica, carbon black or a combination of silica and carbon black. Table II also shows that the devulcanization technique did not greatly reduce the molecular weight of the rubber. Thus, the devulcanization procedure destroyed sulfur-sulfur bonds and/or carbon-sulfur bonds without destroying a significant number of carbon-carbon bonds in the rubber.

### Examples 19-22

In this series of experiments a one liter reactor capable of holding 150 grams of cured rubber for devulcanization was utilized in all of the experiments. These devulcanization experiments were conducted in static or dynamic modes (both modes with or without agitation) using 2-butanol alone or a mixture of 2-butanol and carbon dioxide under supercritical conditions as the devulcanization agent.

Compounding evaluations confirmed that the addition of 20 phr (parts by weight per 100 parts by weight of rubber) of rubber devulcanized by utilizing the technique of this invention can be added to a standard tire tread compound with minimal effect on cure, modulus or elongation. Tensile strength is slightly decreased in most cases, but can be compensated for by increasing the level of curative in the tire tread compound formulation. Experiments conducted in the static mode show a temperature dependence, with greater changes occurring at higher temperatures. Dynamic mode experiments were only conducted at 260°C and had the same relative effect as the static mode at that temperature. The experiments that employed a mixture of 2-butanol and carbon dioxide (CO₂) at levels up to 50% produced changes in the devulcanized rubber similar to those obtained when using only 2-butanol under supercritical conditions. However, the use of carbon dioxide can reduce the process cost and may be used to remove any residual 2-butanol in the devulcanized rubber. A summary of the typical properties obtained at the 20 phr level is shown in Table III. The compound made in Example 19 was a control that was made without including devulcanized rubber.

Samples were treated under the same conditions and were combined and mixed in a Research Kobe mixer to evaluate processing, use of more devulcanized rubber in the tire tread formulation, and to perform additional tests. Generally, the addition of the devulcanized rubber to the tread formulations improved mixing and milling compared to similar amounts of untreated rubber. The compounds made with devulcanized rubber had better tack and banded better on a mill than untreated rubber and in some cases processed better on the mill than the control with no recycle material.

**TABLE III**

| Example | 19 | 20 | 21 | 22 |
|---|---|---|---|---|
| Temperature | - | 270°C | 270°C | 270°C |
| Pressure | - | 900 psig* | 900 psig* | 900 psig* |
| Time | - | 20 min | 20 min | 20 min |
| Mode | - | Dynamic | Static | Dynamic |
| Cosolvent | - | 30% CO₂ | 50% CO₂ | 50% CO₂ |
| Recycle Level | 20 phr | 20 phr | 20 phr | 20 phr |

| Rheometer Properties at 150°C (minutes) | | | | |
|---|---|---|---|---|
| Torque Max | 37 | 35.9 | 38.3 | 36.6 |
| Torque Min | 13 | 11.3 | 11.7 | 11.1 |
| Delta Torque | 24 | 24.6 | 26.6 | 25.5 |
| Ts1 | 5.5 | 6 | 6.4 | 6.7 |
| T25 | 7.8 | 8.4 | 9.1 | 9.9 |
| T90 | 17.1 | 16.4 | 16.6 | 17.3 |

| Physical Properties | | | | |
|---|---|---|---|---|
| Tensile | 15 Mpa | 17.5 Mpa | 17.7 Mpa | 16.5 MPa |
| Elongation | 575% | 673% | 689% | 660% |
| 100% Mod. | 1.36 Mpa | 1.43 Mpa | 1.35 Mpa | 1.25 MPa |
| 300% Mod. | 6.08 Mpa | 6.59 Mpa | 6.4 Mpa | 6.22 MPa |

| | | | | |
|---|---|---|---|---|
| *6.3 MPa | | | | |

## Claims

1. A process for devulcanizing cured rubber comprising heating the cured rubber to a temperature which is within the range of 150°C to 300°C under a pressure of at least 3.4 x 10⁶ Pascals in the presence of a mixture of carbon dioxide and 2-butanol.

2. A process for devulcanizing the surface of reclaimed rubber crumb into surface devulcanized reclaimed rubber crumb, said process comprising the steps of (1) heating the reclaimed rubber crumb to a temperature which is within the range of 150°C to 300°C under a pressure of at least 3.4 x 10⁶ Pascals in the presence of a mixture of 2-butanol and carbon dioxide to devulcanize the surface of the rubber crumb thereby producing a slurry of the surface devulcanized reclaimed rubber crumb in the mixture of 2-butanol and carbon dioxide, wherein the reclaimed rubber crumb has a particle size which is within the range of 44 µm to 840 µm, and (2) separating the surface devulcanized reclaimed rubber crumb from the mixture of 2-butanol and carbon dioxide.

3. The process as specified in claim 1 or 2, wherein the weight ratio of carbon dioxide to 2-butanol is within the range of 5:95 to 70:30.

4. The process as specified in claim 1 or 2, wherein the weight ratio of carbon dioxide to 2-butanol is within the range of 20:80 to 60:40.

5. The process as specified in claim 1 or 2, wherein the weight ratio of carbon dioxide to 2-butanol is within the range of 30:70 to 55:45.

6. The process as specified in any of the preceding claims, wherein the devulcanization is carried out at a pressure which is within the range of 3.4 x 10⁶ Pascals to 3.4 x 10⁷ Pascals.

7. The process as specified in any of the preceding claims, wherein the devulcanization is carried out at a temperature which is within the range of 200°C to 280°C.

8. The process as specified in claim 2, wherein the reclaimed rubber crumb has a particle size which is within the range of 149 µm to 420 µm.

9. The process as specified in any of the preceding claims, wherein the devulcanization is carried out at a pressure which is within the range of 6.9 x 10⁶ Pascals to 2.8 x 10⁷ Pascals; and wherein said process is carried out at a temperature which is within the range of 240°C to 270°C.

10. The process as specified in any of the preceding claims, wherein said process is carried out at a pressure which is within the range of 1.7 x 10⁷ Pascals to 2.4 x 10⁷ Pascals.

## Patentansprüche

1. Ein Prozess zum Entvulkanisieren von ausgehärtetem Kautschuk, umfassend das Erhitzen des ausgehärteten Kautschuks auf eine Temperatur, die im Bereich von 150 °C bis 300 °C liegt, unter einem Druck von wenigstens 3,4 x 10⁶ Pascal in Gegenwart einer Mischung von Kohlendioxid und 2-Butanol.

2. Ein Prozess zum Entvulkanisieren der Oberfläche von Regeneratgummimehl zu oberflächen-entvulkanisiertem Regeneratgummimehl, wobei besagter Prozess die Schritte umfasst des (1) Erhitzens des Regeneratgummimehls auf eine Temperatur, die in dem Bereich von 150 °C bis 300 °C liegt, unter einem Druck von wenigstens 3,4 x 10⁶ Pascal in Gegenwart eines Gemischs aus 2-Butanol und Kohlendioxid, um die Oberfläche des Gummimehls zu entvulkanisieren, wodurch eine Aufschlämmung des oberflächen-entvulkanisierten Regeneratgummimehls in dem Gemisch von 2-Butanol und Kohlendioxid hergestellt wird, wobei das Regeneratgummimehl eine Teilchengröße hat, die im Bereich von 44 µm bis 840 µm liegt, und (2) Abscheidens des oberflächen-entvulkanisierten Regeneratgummimehls von dem Gemisch aus 2-Butanol und Kohlendioxid.

3. Der Prozess, wie in Anspruch 1 oder 2 spezifiziert, wobei das Gewichtsverhältnis von Kohlendioxid zu 2-Butanol im Bereich von 5 : 95 bis 70 : 30 liegt.

4. Der Prozess, wie in Anspruch 1 oder 2 spezifiziert, wobei das Gewichtsverhältnis von Kohlendioxid zu 2-Butanol im Bereich von 20 : 80 bis 60 : 40 liegt.

5. Der Prozess, wie in Anspruch 1 oder 2 spezifiziert, wobei das Gewichtsverhältnis von Kohlendioxid zu 2-Butanol im Bereich von 30 : 70 bis 55 : 45 liegt.

6. Der Prozess, wie in einem der vorangehenden Ansprüche spezifiziert, wobei die Entvulkanisierung auf einem Druck durchgeführt wird, der im Bereich von 3,4 x 10⁶ Pascal bis 3,4 x 10⁷ Pascal liegt.

7. Der Prozess, wie in einem der vorangehenden Ansprüche spezifiziert, wobei die Entvulkanisierung auf einer Temperatur durchgeführt wird, die im Bereich von 200 °C bis 280 °C liegt.

8. Der Prozess, wie in Anspruch 2 spezifiziert, wobei das Regeneratgummimehl eine Teilchengröße hat, die im Bereich von 149 µm bis 420 µm liegt.

9. Der Prozess, wie in einem der vorangehenden Ansprüche spezifiziert, wobei die Entvulkanisierung auf einem Druck durchgeführt wird, der im Bereich von 6,9 x 10⁶ Pascal bis 2,8 x 10⁷ Pascal liegt ; und wobei besagter Prozess auf einer Temperatur durchgeführt wird, die im Bereich von 240 °C bis 270 °C liegt.

10. Der Prozess, wie in einem der vorangehenden Ansprüche spezifiziert, wobei besagter Prozess auf einem Druck durchgeführt wird, der im Bereich von 1,7 x 10⁷ Pascal bis 2,4 x 10⁷ Pascal liegt.

## Revendications

1. Procédé pour la dévulcanisation de caoutchouc vulcanisé, comprenant le fait de chauffer le caoutchouc vulcanisé à une température qui se situe dans la plage de 150 °C à 300 °C sous une pression d'au moins 3,4 x 10⁶ Pascals en présence d'un mélange de dioxyde de carbone et de 2-butanol.

2. Procédé pour la dévulcanisation de la surface d'un granulé de caoutchouc régénéré pour obtenir un granulé de caoutchouc régénéré soumis à une dévulcanisation en surface, ledit procédé comprenant les étapes consistant à : (1) chauffer le granulé de caoutchouc régénéré à une température qui se situe dans la plage de 150 °C à 300 °C sous une pression d'au moins 3,4 x 10⁶ Pascals en présence d'un mélange de 2-butanol et de dioxyde de carbone pour obtenir la dévulcanisation de la surface du granulé de caoutchouc et obtenir ainsi une suspension du granulé de caoutchouc régénéré soumis à une dévulcanisation en surface dans le mélange de 2-butanol et de dioxyde de carbone, le granulé de caoutchouc régénéré possédant une granulométrie qui se situe dans la plage de 44 µm à 840 µm, et (2) séparer du mélange de 2-butanol et de dioxyde de carbone le granulé de caoutchouc régénéré soumis à une dévulcanisation en surface.

3. Procédé tel que spécifié à la revendication 1 ou 2, dans lequel le rapport pondéral du dioxyde de carbone au 2-butanol se situe dans la plage de 5 : 95 à 70 : 30.

4. Procédé tel que spécifié à la revendication 1 ou 2, dans lequel le rapport pondéral du dioxyde de carbone au 2-butanol se situe dans la plage de 20 : 80 à 60 : 40.

5. Procédé tel que spécifié à la revendication 1 ou 2, dans lequel le rapport pondéral du dioxyde de carbone au 2-butanol se situe dans la plage de 30 : 70 à 55 : 45.

6. Procédé tel que spécifié dans l'une quelconque des revendications précédentes, dans lequel on effectue la dévulcanisation sous une pression qui se situe dans la plage de 3,4 x 10⁶ Pascals à 3,4 x 10⁷ Pascals.

7. Procédé tel que spécifié dans l'une quelconque des revendications précédentes, dans lequel on effectue la dévulcanisation à une température qui se situe dans la plage de 200 °C à 280 °C.

8. Procédé tel que spécifié à la revendication 2, dans lequel le granulé de caoutchouc régénéré possède une granulométrie qui se situe dans la plage de 149 µm à 420 µm.

9. Procédé tel que spécifié dans l'une quelconque des revendications précédentes, dans lequel on effectue la dévulcanisation sous une pression qui se situe dans la plage de 6,9 x 10⁶ Pascals à 2,8 x 10⁷ Pascals ; et dans lequel on effectue ledit procédé à une température qui se situe dans la plage de 240 °C à 270 °C.

10. Procédé tel que spécifié dans l'une quelconque des revendications précédentes, dans lequel on effectue la dévulcanisation sous une pression qui se situe dans la plage de 1,7 x 10⁶ Pascals à 2,4 x 10⁷ Pascals.
